# EUROPÄISCHE PATENTANMELDUNG

(11) **EP 0 816 741 A2**
(43) Veröffentlichungstag der Anmeldung: **07.01.1998**
(21) Anmeldenummer: 97109612.8
(22) Anmeldetag: 13.06.1997
(51) Int. Cl.: F16L 37/084, F16L 37/092, F16L 33/22

(54) **Einsteckkupplung**

(30) Priorität: 27.06.1996 DE 19625687
(71) Anmelder: Friatec Aktiengesellschaft Keramik- und Kunststoffwerke, D-68229 Mannheim (DE)
(72) Erfinder: Vogel, Rolf, 69198 Schriesheim (DE); Sichler, Wolfgang, 68239 Mannheim (DE); Scholl, Reinhold, 68309 Mannheim (DE)
(74) Vertreter: Schmitt, Meinrad, Dipl.-Ing.

(57) **Zusammenfassung**

Eine Einsteckkupplung für Rohre enthält einen Muffenkörper (2) und eine Halteeinrichtung, insbesondere mit einem Klemmkörper (6), zur Verbindung eines Rohrendes (3, 4) mit dem Muffenkörper (2). Diese Einsteckkupplung soll mit geringem Aufwand eine funktionsgerechte Handhabung bei der Montage ermöglichen und die Gefahr von Montagefehlern möglichst ausschließen. Es wird vorgeschlagen, im Muffenkörper (2) einen mittels des Rohrendes (3, 4) axial verschiebbaren Mitnahmekörper (50) anzuordnen, welcher unabhängig von der Halteeinrichtung ausgebildet ist. Der Mitnahmekörper (50) enthält ein Anschlagelement (52), welches beim Einschieben des Rohrendes (3, 4) über eine Kante (60) geschoben wird und bei Erreichen einer vorgegebenen Einschubtiefe des Rohrendes (3, 4) an einer Gegenfläche (62) unter Erzeugung eines akustischen Signales und / oder eines Schwingungssignals anschlägt.

## Beschreibung

Die Erfindung bezieht sich auf eine Einsteckkupplung für Rohre gemäß den im Oberbegriff des Patentanspruchs 1 angegebenen Merkmalen.

Aus der europäischen Patentanmeldung gemäß EP 587 131 A1 ist eine derartige Einsteckkupplung mit einer Kupplungsmuffe, einer Halteeinrichtung in Form einer Klemmvorrichtung sowie einer Betätigungsvorrichtung bekannt. Die Kupplungsmuffe ist als Doppelmuffe ausgebildet, so daß mit dieser Einsteckkupplung die Enden von zwei Kunststoffrohren mittels der beiden Klemmvorrichtungen verbindbar sind. Die Halteeinrichtung enthält einen Klemmring, der außen einen Klemmkonus und innen zumindest eine Klemmrippe aufweist, welche mit dem jeweiligen Rohrende in Eingriff bringbar ist. Mittels einer auf die Kupplungsmuffe aufschraubbaren Überwurfmutter ist ein Gegenkonus mit dem Klemmring verspannbar. Weiterhin ist innerhalb der Kupplungsmuffe ein Dichtring angeordnet. Bei Herstellung der Verbindung ist darauf zu achten, daß das Rohrende weit genug in die Kupplungsmuffe eingeführt wird, damit der Klemmring und ebenso der Dichtring ihre Funktionen erfüllen können. Es besteht die Gefahr, daß infolge eines unvollständigen Einschiebens des Rohrendes in die Einsteckkupplung die Verbindung nicht oder nur fehlerhaft hergestellt wird.

Aus der Offenlegungsschrift DE 31 12 255 A1 ist eine Schnellkupplung für Rohre bekannt, deren Halteeinrichtung ein axial verschiebbares Rückhalteelement aufweist. Das Rückhalteelement enthält axiale Schlitze und ist teilweise innerhalb eines starren Ringes mit einer kreisförmigen Rippe angeordnet. Das Rückhalteelement besteht aus elastischem Federmaterial und besitzt eine radial nach außen gerichtete Rippe sowie am vorderen Ende eine konische Fläche, welche mit einem Konus eines Zwischenelements korrespondiert. Beim Einschieben eines Rohres werden zunächst das Rückhalteelement und der umgebende Ring mit der kreisförmigen Rippe in axialer Richtung bewegt, bis der Ring an einem Boden des Muffenkörpers zur Anlage gelangt. Beim weiteren Einschieben des Rohres wird der radiale Ring des Rückhalteelements an der kreisförmigen Rippe vorbeibewegt, wobei die Widerstandskraft gegen das Einschieben zunimmt und das Rückhalteelement radial auf die Außenfläche des Rohres gepreßt wird. Ist die Rippe des Rückhalteelements vollständig an der kreisförmigen Rippe des Ringes vorbeibewegt, so gelangt die Rippe in eine ringförmige Nut des Ringes, wobei die vorgegebene Widerstandskraft gegen die Einschubbewegung plötzlich aufhört. Nachfolgend wird das Rohr zusammen mit dem Rückhalteelement und dem eingerasteten Ring entgegen der Einschubbewegung nach vorn bewegt, bis die konische Fläche des Rückhalteelements gegen den Konus des Zwischenelements verspannt ist. Die Vorgabe und das Abstimmen der Widerstandskraft erfordert einen nicht unerheblichen Fertigungsaufwand mit geringen zulässigen Toleranzen, vor allem des Rückhalteelements und des Ringes mit der kreisförmigen Rippe. Auch für den Rohraußendurchmesser müssen recht enge Grenzen eingehalten werden, da ansonsten die Zähne des Rückhalteelements nur teilweise in das Rohr gepreßt werden und das Rohr aus der Kupplung wieder herausgezogen werden kann. Die vorbekannte Kupplung ermöglicht ferner axiale Relativbewegungen des Rohres bezüglich der Kupplung, wobei Fremdkörper in den Bereich einer zwischen einer Mutter und dem Zwischenelement angeordneten Dichtung gelangen können und ein Austreten des Druckmediums aus der Rohrleitung befürchtet werden muß.

Des weiteren ist aus dem Gebrauchsmuster DE 93 08 181 U1 eine Anschlußarmatur für Rohre bekannt, welche ein an einem Rohrende befestigbares Anschlußelement mit einer Ringnut für einen Dichtring aufweist. Es ist ein bei der Montage mittels des Rohrendes über den Dichtring bewegbarer Pilotring vorhanden, welcher eine Anlagefläche für eine stirnseitige Endfläche des Rohrendes aufweist. Beim Einschieben des Rohrendes muß der Pilotring durch den Dichtungsring geschoben werden, wobei ein erhöhter Einschubwiderstand überwunden werden muß. Ist der Pilotring vollständig durch den Dichtring durchgeschoben, so nimmt der Widerstand merklich ab. Mit dem Pilotring soll eine Beschädigung des Dichtringes durch das Rohrende vermieden werden, ohne daß das Rohrende mit einer Fase versehen werden muß.

Schließlich ist aus der Offenlegungsschrift DE 43 04 241 A1 eine Steckverbindung für Rohre, Schläuche oder ähnliche Rundkörper bekannt, welche in einer Aufnahmehülse oder Muffe eine Halteeinrichtung und wenigstens einen Dichtring aufweist. Die Halteeinrichtung enthält radial innen eine geschlitzte oder fächerartig ausgebildete Haltescheibe, deren radial nach innen zum Muffengrund geneigten Zungen zum Einkrallen in die Außenfläche des eingeschobenen Rohrendes dienen. Auch bei dieser Steckverbindung besteht die Gefahr, daß das Rohrende nur unvollständig eingeschoben wird und die geforderte Verbindung nicht ordnungsgemäß hergestellt wird.

Hiervon ausgehend liegt der Erfindung die Aufgabe zugrunde, die Einsteckkupplung dahingehend auszubilden, daß mit geringem Aufwand und hoher Sicherheit die Verbindung mit dem wenigstens einen Rohrende durchführbar ist. Die Einsteckkupplung soll eine einfache funktionsgerechte Handhabung bei der Montage ermöglichen und die Gefahr von Montagefehlern möglichst ausschließen. Die Einsteckkupplung soll mit geringem Fertigungsaufwand herstellbar sein und es soll gewährleistet werden, daß bei der Herstellung der Verbindung funktionswesentliche Teile, wie insbesondere die Dichtung, ein Klemmring oder ähnliches, ordnungsgemäß zum Einsatz gelangen.

Die Lösung dieser Aufgabe erfolgt gemäß den kennzeichnenden Merkmalen des Patentanspruchs 1.

Die vorgeschlagene Einsteckkupplung zeichnet sich durch eine funktionsgerechte Konstruktion aus und gewährleistet eine funktionssichere und dauerhafte Verbindung. Es ist ein vom einzuschiebenden Rohrende axial verschiebbarer Mitnahmekörper mit einem Anschlagelement vorgesehen. Das Anschlagelement ist vorzugsweise als eine radial bewegbare Zunge ausgebildet und schlägt beim Erreichen einer vorgebbaren Einschubtiefe des Rohres an eine zugeordnete Gegenfläche an. Beim Anschlagen entsteht ein Signal, welches als ein Klickgeräusch bezeichnet werden kann und welches vom Monteur problemlos und ohne zusätzliche Hilfsmittel wahrnehmbar ist. Das beim Anschlagen erzeugte Signal kann von dem Monteur als insbesondere akustisches Signal wahrgenommen werden und / oder das Signal kann als Schwingung oder Vibration mit der Hand selbst wahrgenommen bzw. ertastet werden.

Die radial bewegbare Zunge wird beim Einschieben des Rohrendes über eine radial nach innen gerichtete Endfläche geschoben und radial vorgespannt, und nach dem Überfahren einer Kante schlägt die Zunge mit dem Erreichen der vorgegebenen Einschubtiefe an die Gegenfläche an, wobei das Schwingungssignal entsteht, welches als Geräusch gehört oder als Schwingung mit der Hand ertastet wird. Die bewegbare Zunge und die genannte Gegenfläche sind derart aufeinander abgestimmt, daß keine zusätzlichen Verstärkungseinrichtungen für das Anschlag- und / oder Schwingungssignal erforderlich sind. Das radiale Vorspannen des Anschlagelements bzw. der Zunge erfordert praktisch keinen zusätzlichen Kraftbedarf, und die Einschubbewegung des Rohres kann weitgehend ungehindert durchgeführt und abgeschlossen werden. Es ist nicht erforderlich, daß beim Vorspannen das Anschlagelement mit der Außenfläche des Rohres in Kontakt gelangt, und nach dem Überfahren der genannten Kante und dem radialen Ausweichen des Anschlagelements nach außen ist dieses völlig außer Kontakt zur Außenfläche des Rohres. Nach dem Auftreten des akustisch und / oder als Vibration aufnehmbaren Signals kann der Monteur die Einschubbewegung beenden, denn er weiß mit großer Sicherheit, daß die Verbindung nunmehr ordnungsgemäß hergestellt ist.

Das Mitnahmeelement ist vorzugsweise als ein Ring mit einer Anlagefläche für die axiale Stirnfläche des einzuschiebenden Rohres ausgebildet. Das Anschlagelement ist vorzugsweise integraler Bestandteil des Mitnahmekörpers und nach Art einer Federzunge ausgebildet, welche beim Erreichen der geforderten Einschubtiefe vorzugsweise in radialer Richtung nach außen über eine Stufe, Nase oder dergleichen bewegt wird und anschließend an die zugeordnete Gegenfläche zur Erzeugung des Schwingungs-Signals oder Klickgeräusches anschlägt. Unabhängig von dem erfindungsgemäßen Anschlagelement ist die Halteeinrichtung ausgebildet, welche vorzugsweise einen Klemmring mit konischer Außenfläche enthält. Der Klemmring ist bevorzugt mittels einer Haube bezüglich des Muffenkörpers in der erforderlichen Weise festgelegt. Der Klemmring und der Mitnahmekörper sind erfindungsgemäß voneinander unabhängige separate Bauteile, wobei der Klemmring beim Einschieben des Rohrendes seine axiale Lage im Muffenkörper praktisch unverändert beibehält, während der Mitnahmekörper bezüglich des Muffenkörpers vom Rohrende axial verschoben wird. Nach dem vollständigen, mittels des Anschlagelements signalisierten Einschieben wird die Haube durch axiale Bewegung auf den Muffenkörper aufgeschoben oder aufgeschraubt; hierbei wird der Klemmring gegen die Außenfläche des Rohrendes verspannt. Mittels des Klemmrings wird in zweckmäßiger Weise auch ein Dichtring bezüglich der Außenfläche des Rohrendes und des Muffenkörpers verspannt. Beim Einschieben des Rohrendes behält die dem Anschlagelement zugeordnete Fläche und Kante die axiale Position im Muffenkörper weitgehend unverändert ein, und nur der Mitnahmekörper wird vom Rohrende axial verschoben. Bevorzugt ist der Mitnahmekörper axial beabstandet zur Halteeinrichtung, insbesondere deren Klemmring, als separates Bauteil angeordnet.

Weiterbildungen und besondere Ausgestaltungen der Erfindung sind in den Unteransprüchen angegeben und werden in der nachfolgenden Beschreibung weiter erläutert. Die Erfindung wird nachfolgend anhand der in der Zeichnung dargestellten besonderen Ausführungsbeispiele näher erläutert. Es zeigen:
- Fig. 1: einen Schnitt in einer axialen Schnittebene durch die als Doppelmuffe ausgebildete Einsteckkupplung,
- Fig. 2: einen Schnitt durch den mit einer Hülse noch verbundenen Mitnahmekörper,
- Fig. 3: eine Ansicht auf die Hülse und den Mitnahmekörper in Blickrichtung III gemäß Fig. 2,
- Fig. 4: einen axialen Schnitt durch die Haube,
- Fig. 5: eine Ansicht der Haube in Richtung V, gemäß Fig. 4,
- Fig. 6: einen Schnitt in einer axialen Schnittebene durch ein weiteres Aus führungsbeispiel,
- Fig. 7,8: einen axialen Schnitt und eine Ansicht der Hülse mit dem Mitnahmekörper gemäß Fig. 6,
- Fig. 9,10: einen axialen Schnitt und eine Ansicht des Klemmrings,
- Fig.11,12: einen axialen Schnitt und eine Ansicht des Muffenkörpers.

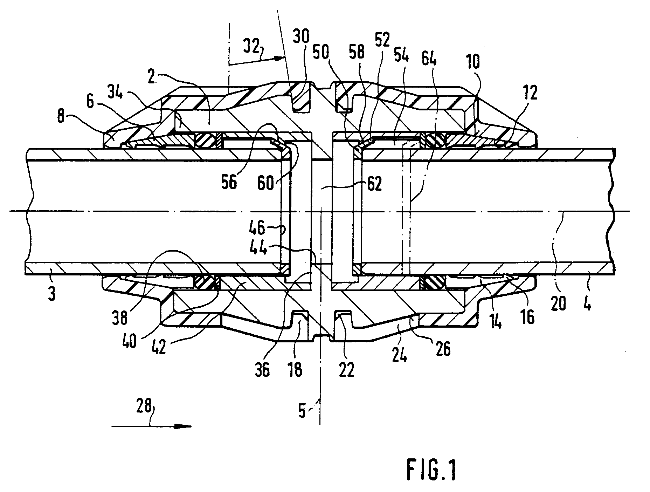

Fig. 1 zeigt in einem axialen Längsschnitt eine Einsteckkupplung mit einem Muffenkörper 2, welcher nachfolgend auch als Gehäuse bezeichnet wird und in welchen von beiden Seiten her jeweils ein Rohrende 3, 4 teilweise eingeschoben ist. Die Einsteckkupplung bzw. der Muffenkörper ist als Doppelmuffe ausgebildet, welche bezüglich einer Mittelebene 5 spiegelsymmetrisch ausgebildet ist. Im Rahmen der Erfindung kann die Einsteckkupplung auch nur für ein einziges Rohrende ausgebildet sein und insbesondere Bestandteil eines Fittings, einer Armatur oder dergleichen sein. Soweit nachfolgend für die in der Zeichnung dargestellte Doppelmuffe der linke oder rechte Teil erläutert wird, gelten diese Erläuterungen entsprechend auch für den anderen Teil. Die einzelnen Komponenten des linken bzw. rechten Teils der Doppelmuffe sind übereinstimmend ausgebildet und bezüglich der Mittelebene gedreht in die Einsteckkupplung eingebaut, wobei lediglich der Muffenkörper einheitlich für beide Teile ausgebildet ist.

Im Gehäuse oder Muffenkörper 2 ist ein Klemmring 6 angeordnet, welcher teilweise auch von einem Befestigungskörper 8 umgeben ist. Der Befestigungskörper 8 ist in zweckmäßiger Weise als Haube oder Kappe ausgebildet, welche einen wesentlichen Teil des Muffenkörpers 2 übergreift. Bei der dargestellten Doppelmuffe übergreift jede der beiden Befestigungskörper oder Kappen 8 praktisch vollständig die jeweils zugeordneten Teile des Muffenkörpers 2 sowie des Klemmringes. Der Klemmring 6 besitzt eine konische Außenfläche 10, an welcher eine korrespondierende konische Innenfläche 12 des Befestigungskörpers 8 anliegt. Der Klemmring 6 ist nicht vollständig innerhalb des Muffenkörpers angeordnet, sondern ragt im Rahmen der Erfindung zumindest mit der konischen Außenfläche 10 aus dem Muffenkörper heraus und in den Teil des Befestigungskörpers 8 hinein, in welchem die konische Innenfläche 12 vorgesehen ist. Der Klemmring 6 enthält einen vorzugsweise axialen Schlitz 14 und weist auf seiner Innenfläche Klemmzähne 16 auf, welche zum Einkrallen in die Außenfläche des Rohres 3 bzw. 4 vorgesehen sind. Der Befestigungskörper 8 ist als eine den Muffenkörper 2 teilweise übergreifende Haube ausgebildet und wird nachfolgend als solche bezeichnet. Der Befestigungskörper bzw. die Haube 8 enthält an ihrem der Mittelebene 5 zugewandten Ende Rastelemente 18, welche radial nach innen zur Längsachse 20 gerichtet sind und in eine Umfangsnut 22 des Muffenkörpers eingreifen. Die Haube 8 enthält über den Umfang verteilt eine Anzahl von Längsschlitzen 24, welche sich über einen Teil der Gesamtlänge der Haube 8 von den Rastelementen 18 her erstrecken. Die Haube 8 besteht aus einem hinreichend federelastischen Werkstoff, insbesondere Kunststoff, und die durch die Längsnuten 24 gebildeten Arme mit den Rastelementen 18 können in vorgegebenen Maße radial nach außen zu Herstellung der Verbindung mit dem Muffenkörper federelastisch aufgebogen werden. Der Muffenkörper 2 weist hierfür vor der Umfangsnut 22 eine konische Außenfläche 26 auf, wobei die Konusspitze von der Mittelebene 5 abgewandt liegt.

Zur Herstellung der Verbindung zwischen Muffenkörper 2 und Haube 8 wird diese in Richtung des Pfeiles 28 auf den Muffenkörper 2 soweit axial aufgeschoben, bis die Rastelemente 18 in die Umfangsnut 22 eingreifen. Die dem freien Ende des Muffenkörpers zugewandte Seitenwand 30 der Schnappnut oder Umfangsnut 22 liegt nicht exakt in einer Radialebene, sondern ist geneigt oder mit einem Radius 32 angeordnet, wobei der Mittelpunkt dieser Torus- oder Kreisfläche dem freien Ende 34 des Muffenkörpers 2 zugewandt ist. Hierdurch ist in zweckmäßiger Weise gewährleistet, daß die Haube 8 in axialer Richtung, und zwar in Richtung des Pfeiles 28, auf den Muffenkörper 2 gezogen wird. Des weiteren wird nach dem Einschnappen der Rastelemente 18 in die Umfangsnut 22 ein Herauslösen unterbunden.

Obgleich die erläuterte, nach der Herstellung nicht mehr lösbare Verbindung des Befestigungskörpers bzw. der Haube sich als sehr zweckmäßig erwiesen hat, können auch andere Mittel zur Festlegung der Haube auf dem Muffenkörper 2 vorgesehen sein, wobei nur beispielshaft auf eine lösbare Schraubverbindung oder eine wiederum nicht lösbare Schweißverbindung verwiesen sei. Ferner erfolgt durch die erläuterte Halteeinrichtung mit Klemmring und Haube keine Einschränkung der Erfindung. Es können auch andere Konstruktionen für die Halteeinrichtung, also für die Verbindung des eingeschobenen Rohrendes 3, 4 mit dem Muffenkörper 2, vorgesehen sein.

In axialer Richtung zum Muffengrund 36 hin schließt an den Klemmring 6 im Inneren des Muffenkörpers 2 ein Dichtring 38 an, an welchem ein Stützring 40 anliegt. Weiter folgt eine Hülse 42, welche zwischen dem Stützring 40 und dem Muffengrund 36 angeordnet ist. Bei der hier gezeigten Doppelmuffe ist der Muffengrund 36 durch eine axiale Fläche eines Ringes 44 gebildet, welcher im Bereich der Mittelebene 55 angeordnet ist. Es versteht sich, daß bei einteiliger Muffenausbildung die Hülse 42 an einer mit dem Muffengrund 36 vergleichbaren Fläche des Fittings, einer Armatur oder dergleichen anliegt und abgestützt ist. Die erläuterten Komponenten sind derart aufeinander abgestimmt, daß nach dem Einschieben des Rohrendes 3, 4 in den Muffenkörper 2 der Dichtring 38 unter der erforderlichen radialen Vorspannung an der Außenfläche des Rohrendes 3, 4 zwecks Abdichtung anliegt. Der Dichtring 38 ist axial zwischen dem Klemmring 6 und der Hülse 42 bzw. dem Stützring 40 angeordnet. Die Hülse 52 und / oder der Stützring 40 sind axial fixiert, und zwar zweckmäßig am Muffengrund 36 derart, daß beim axialen Verschieben des Befestigungskörpers 8 in der erläuterten Weise der Klemmring 6 axial in Richtung auf den Stützring 40 und / oder die Hülse 42 bewegt wird und somit der Dichtring 38 festgespannt wird. Es sei ausdrücklich festgehalten, daß beim Einschieben des Rohrendes der Stützring 40 und / oder die Hülse 42 keine Axialbewegung durchführen und im Muffenkörper 2 gegen die Einschubbewegung axial gesichert sind.

Das Rohrende 3, 4 ist gemäß Zeichnung noch nicht vollständig in den Muffenkörper 2 eingeschoben. Die axiale Stirnfläche 46 des Rohrendes 3 liegt an einem hier ringförmig ausgebildeten Mitnahmekörper 50 an, welcher unabhängig von der Halteeinrichtung bzw. deren Klemmring und zu dieser axial beabstandet angeordnet ist und ferner wenigstens ein Anschlagelement 52 aufweist. Es ist von Bedeutung, daß der Mitnahmekörper 50 unabhängig von der Halteeinrichtung ausgebildet ist, welche bei der hier dargestellten Ausführungsform den Klemmkörper 6 enthält. Der Mitnahmekörper 50 ist separat und unabhängig von der Halteeinrichtung beim Einschieben des Rohrendes bewegbar. Über den Umfang des Mitnahmekörpers 50 verteilt sind vorzugsweise drei derartige Anschlagelemente vorgesehen, welche vorzugsweise als radial bewegbare Zungen ausgebildet sind. Das Anschlagelement 42 ist in einer axialen Nut oder Ausnehmung 54 der Hülse 42 angeordnet und/ oder geführt. In der dargestellten Position des Rohrendes 3 ist der Mitnahmekörper 50 axial bereits so weit verschoben, daß die Außenfläche 56 des zur Längsachse 20 geneigt angeordneten Anschlagelements 52 an einer vorzugsweise geneigt angeordneten Endfläche 58 der Längsnut 54 anliegt. Aufgrund der Federelastizität des Anschlagelements 52 wird dieses beim weiteren Einschieben des Rohrendes 2 radial nach innen gedrückt, bis sein freies Ende über eine Kante 60 hinweggeschoben ist. Nunmehr springt das Anschlagelement 52 über die Kante 60 hinweg und schlägt danach an eine Gegenfläche 62 im Inneren der Hülse 42. Beim Anschlagen des freien Endes des Anschlagelements 52 an diese Gegenfläche 62 entsteht erfindungsgemäß ein Signal, welches akustisch und/oder als Vibration manuell von der Bedienungsperson wahrgenommen wird und auch als Klickgeräusch oder Klopfgeräusch bezeichnet werden kann. Hierdurch ist der Bedienungsperson das vollständige ordnungsgemäße Einschieben des Rohrendes 3 in die Einsteckkupplung signalisiert. Der Innenfläche der Kante 60 einerseits und der größere Innendurchmesser der Gegenfläche 62 andererseits sind derart aufeinander abgestimmt, daß das akustische Signal außerhalb der Einsteckkupplung von der Bedienungsperson eindeutig wahrgenommen wird.

Mit strichpunktierten Linien 64 ist die Position des Mitnahmekörpers 50 vor dem Einschieben des Rohrendes 3 angedeutet. In dieser Position ist, wie nachfolgend noch zu erläutern ist, der Mitnahmekörper 50 mit der Hülse 42 derart verbunden, daß ein unbeabsichtigtes Herauslösen des Mitnahmekörpers 50 verhindert ist. Die Verbindung zwischen Mitnahmekörper 50 und der Hülse 42 ist derart vorgegeben, daß sie beim Einschieben des Rohrendes 3 mit einem vergleichsweise geringen Kraftaufwand gelöst wird, so daß nachfolgend der Mitnahmekörper 50 in der erläuterten Weise in axialer Richtung in Richtung des Pfeiles 28 verschoben werden kann.

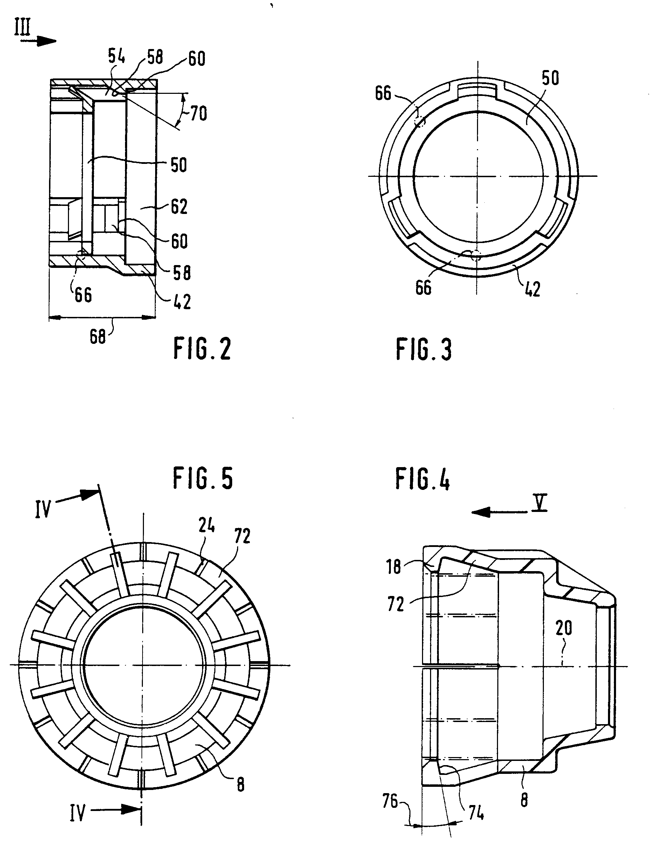

Fig. 2 und 3 zeigen den Mitnahmekörper 50 in der mit der Hülse 42 verbundenen Position. Zwischen der Hülse 42 und dem Mitnahmekörper 50 ist wenigstens ein kleiner Steg 66 vorhanden. Die Hülse 42 und der Mitnahmekörper 50 werden vorzugsweise einteilig gemeinsam mit dem wenigstens einen Steg 66 hergestellt. Über den Umfang verteilt sind zweckmäßig 3 derartige Stege 66 zwischen der Innenfläche der Hülse 42 und der Außenfläche des Mitnahmekörpers 50 vorgesehen. Diese Stege 66 sind derart dimensioniert, daß sie beim Einwirken einer vorgebbaren axialen Kraft abreißen und somit der Mitnahmekörper 50 in der Hülse 42 axial verschiebbar ist. Die Stege 66 sind vorzugsweise nicht im Bereich der Nuten 54 für die Anschlagelemente bzw. Zungen 52 angeordnet, sondern jeweils in Bereich zwischen in Umfangsrichtung benachbart angeordneten Nuten 54.

In Fig. 3 sind gut die drei Nuten 54 für die gleichfalls drei Anschlagelemente bzw. Zungen 52 zu erkennen. Ferner sei festgehalten, daß die axialen Nuten 54 sich nur über einen Teil der Gesamtlänge 68 der Hülse 42 erstrecken, welche im Bereich der Gegenfläche 62 über den Umfang vollständig geschlossen ist. An die Längsnut 54 schließt in Richtung zur Gegenfläche 62 die in einem vorgegebenen Winkel 70 geneigt angeordnete Endfläche 58 an, entlang welcher nach dem Abreißen des Mitnahmekörpers 50 beim weiteren Einschieben des genannten Rohrendes das Anschlagelement 52 entlanggleitet, bis es über die Kante 60 hinwegspringt und danach radial nach außen ausweicht und hierbei an die Gegenfläche 62 in der bereits erläuterten Weise anschlägt.

Fig. 4 und 5 zeigen den als Haube 8 ausgebildeten Befestigungskörper mit den beriets erwähnten Armen 72 für die Rastelemente 18. Über den Umfang gleichmäßig verteilt sind eine Anzahl, hier zwölf, derartiger Arme 72 mit den radial nach innen gerichteten Rastelementen 18 vorgesehen. Die inneren Anlageflächen 74 der jeweiligen Rastelemente 18 sind bezüglich der Längsachse 20 in einem Winkel 76 geneigt angeordnet oder mit einem Radius versehen. Dieser Radius bzw. die Neigung ist auf den anhand von Fig. 1 erläuterten Radius bzw. die Schräge oder Neigung der Seitenwand der Umfangsnut des Muffenkörpers abgestimmt.

Obgleich die Anordnung der Hülse 42 sich als zweckmäßig erwiesen hat, kann in einer Weiterbildung der Erfindung die Hülse entfallen bzw. in den Muffenkörper integriert sein. Bei dieser Ausgestaltung sind somit vor allem die Nut 54, die Kante 60 sowie die Gegenfläche 62 im Rahmen der Erfindung integrale Bestandteile des Muffenkörpers 2.

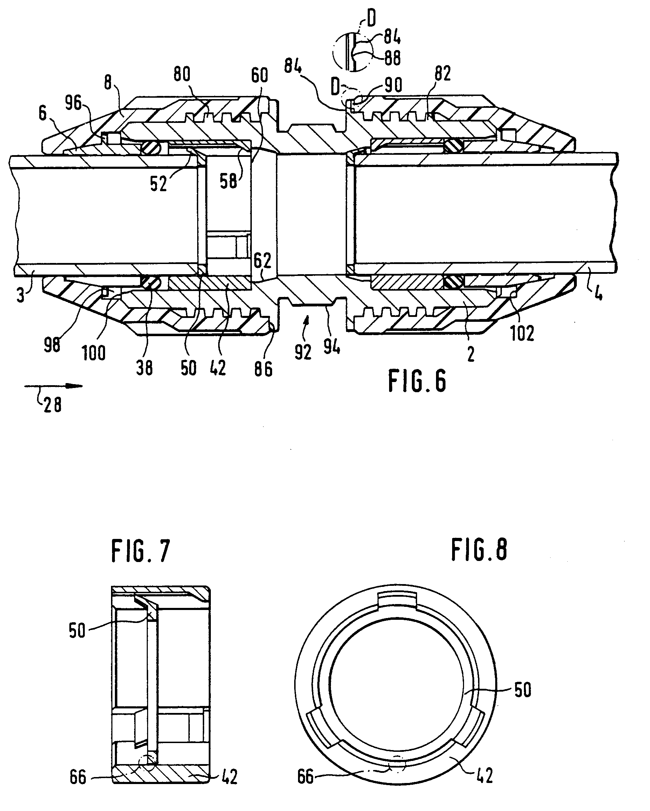

Fig. 6 zeigt eine weitere, besondere Ausführungsform der Erfindung, wobei die Haube 8 mit dem Muffenkörper 2 lösbar verbunden ist. Hierzu enthält die Haube oder der Befestigungskörper 8 ein Innengewinde 80 und der Muffenkörper 2 ein korrespondierendes Außengewinde 82. Das Außengewinde 82 und ebenso das Innengewinde 80 erstrecken sich jeweils nicht über den gesamten Umfang, sondern sind in Segmente mit dazwischenliegenden Zwischenräumen derart unterteilt, daß die Haube nicht über sämtliche Gewindegänge aufgeschraubt werden muß, sondern entsprechend den Segmenten und Zwischenräumen auf den Muffenkörper aufgeschoben und lediglich um einen kleinen Winkelbereich zur Herstellung der Verbindung mit dem Muffenkörper gedreht werden muß. Aufgrund der nachfolgend noch eingehend zu erläuternden Unterteilung der Gewinde 80 und 82 in Segmente ist eine Schnellverbindung geschaffen, welche mit geringem Zeitaufwand eine funktionssichere Verbindung der Haube 8 auf dem Muffenkörper 2 sicherstellt.

Der Muffenkörper 2 weist in zweckmäßiger Weise einen Anschlag 84 für die axiale Stirnfläche 86 der Haube 8 auf. Der Anschlag 84 enthält eine Rastnut 88, welche in radialer Richtung verläuft. Das oben rechts in Figur 6 dargestellte Detail zeigt diese radiale Rastnut 88 in einer aus der Zeichenebene um 90° herausgedrehten Stellung. Die Haube enthält in ihrer axialen Stirnfläche 86 eine korrespondierende Rastnase 90, welche bei Erreichen der vorgegebenen Drehposition der Haube 8 bezüglich des Muffenkörpers 2 in die Rastnut 88 eingreift. Der Muffenkörper 2 enthält in der Mitte einer ringförmigen Ausnehmung 92, deren Boden 94 wenigstens eine Angriffsfläche für ein Werkzeug enthält und vorzugsweise als Achtkant für ein Gabelschlüssel ausgebildet ist. Mit dem Werkzeug bzw. Gabelschlüssel kann eine Bedienungsperson den Muffenkörper beim Aufschrauben der Haube in einfacher Weise festhalten.

Bei dieser besonderen Ausführungsform enthält der Klemmring 6 einen Anschlag 96, welcher beim Einschieben des Rohrendes 3 die axiale Bewegung des Klemmrings 6 derart begrenzt, daß der Dichtring 38 während des Einschiebens des Rohrendes 3 nicht zusätzlich verpresst wird und die erforderliche Einschubkraft praktisch nicht erhöht wird. Ohne den Anschlag 96 würde beim Einschieben des Rohrendes 3 der Klemmring in der Einschubrichtung gemäß Pfeil 28 mitbewegt, bis der Dichtring 38 an der Hülse 42 zur Anlage kommt. Da der Klemmring 6 vergleichsweise fest auf der Außenfläche des Rohrendes 3 aufsitzt, würde der federelastische Dichtring 38 verpresst werden mit der Folge einer radialen Beaufschlagung der Außenfläche und einem Anstieg des Einschubwiderstandes. Aufgrund des Anschlags 96 erfolgt in besonders zweckmäßiger Weise eine Arretierung des Klemmrings 6 dahingehend, daß beim Einschieben eine Erhöhung der Vorspannung des Dichtrings 38 unterbleibt und damit eine Erhöhung der Einschubkraft vermieden wird. Für den Anschlag 96, welcher als radialer Steg, Ring, Segment oder dergleichen ausgebildet ist, ist ein Freiraum 98 vorgesehen, dessen axiale Länge auf den zulässigen Bewegungsweg des Klemmringes 6 abgestimmt ist. Der Freiraum 98 ist in zweckmäßiger Weise zwischen einer axialen Endfläche 100 des Muffenkörpers 2 und einem Bund oder einer Stufe 102 im Inneren der Haube 8 vorgesehen. Der Klemmring 6 mit dem Anschlag 96 kann somit problemlos montiert und eingesetzt werden.

In der linken Hälfte der Fig. 6 ist das Rohrende 3 in der Position dargestellt, in der es beim Einschieben an den Mitnahmekörper 50 zur Anlage gelangt. Wie im Zusammenhang mit der ersten Ausführungsform an Hand von Fig. 2 erläutert, ist in dieser Position der Mitnahmekörper 50 mit der Hülse 42 mittels eines kleinen Steges noch verbunden. Beim weiteren Einschieben des Rohrendes 3 wird diese Verbindung gelöst, und der Mitnahmekörper 50 wird in Richtung des Pfeiles 28 nach rechts verschoben. Hierbei gelangt das Anschlagelement oder die Zunge 52 an die Endfläche 58 der Hülse 42 und wird beim weiteren Einschieben radial nach innen gedrückt. Nachfolgend springt das Anschlagelement 52 über die Kante 60 hinweg und schlägt dann an die Gegenfläche 62, welche bei dieser besonderen Ausführungsform Bestandteil des Muffenkörpers 2 ist. Die Gegenfläche liegt erfindungsgemäß auf einem größeren Radius als die Kante 60, und beim Anschlagen der radial nach außen zurückspringenden Zunge bzw. des Anschlagselements 52 wird das Signal erzeugt, welches von einer Bedienungsperson gehört und / oder in der Hand als Vibration gespürt wird.

Fig. 7 und 8 zeigen die Hülse 42, in welcher der Mitnahmekörper 50 mittels des Steges 66 noch festgelegt ist. Im Vergleich mit der in Fig. 2 erläuterten Ausführungsform weist die Hülse 42 eine geringere axiale Länge auf, da die erläuterte Anschlagfläche nicht Bestandteil der Hülse ist, sondern im Inneren des Muffenkörpers liegt.

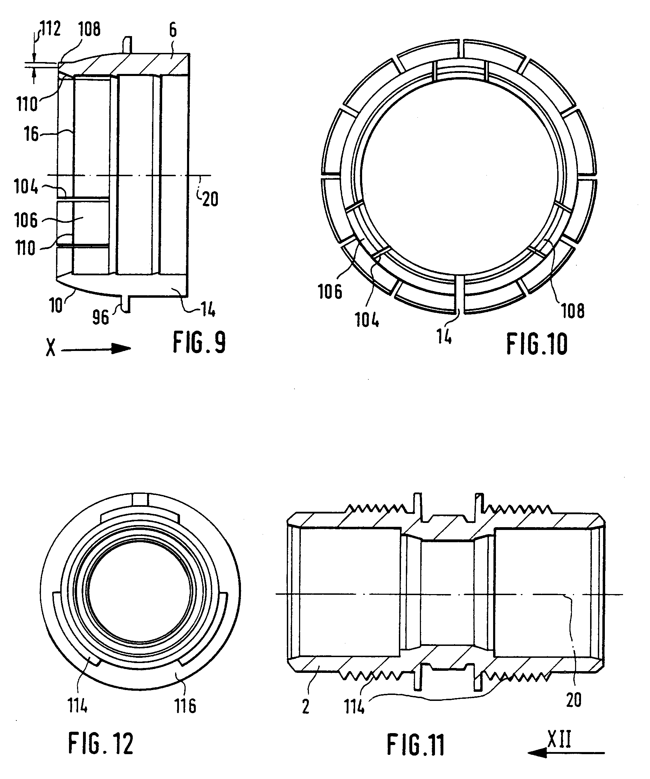

Fig. 9 und 10 zeigen den Klemmring 6 mit dem Anschlag 96. Wie aus Fig. 10 ersichtlich, ist der Anschlag 96 in eine Anzahl von Segmenten unterteilt. Der Klemmring 6 enthält ferner die bereits erläuterte konische Außenfläche 10, welche an der korrespondierenden konischen Innenfläche des Befestigungskörpers bzw. Haube zur Anlage gebracht wird. Bei dieser besonderen Ausführungsform ist der Klemmring 6 im Bereich der konischen Außenfläche 10 mit Schlitzen 104 zur Schaffung wenigstens einer radial nachgiebigen Zunge 106 versehen. Zweckmäßig sind drei derartige Zungen 106 über den Umfang gleichmäßig verteilt vorgesehen. Die wenigstens eine Zunge 106 besitzt radial außen eine über die Außenfläche 10 vorstehende Nase 108, über welche beim Aufschrauben der Haube die Zunge 106 radial weiter nach innen zur Längsachse 20 gedrückt wird, als die übrigen Bereiche des mit dem Schlitz 14 versehenen Klemmringes 6. Der radial innenliegende Klemmzahn 110 der Zunge 106 wird somit stärker in die Außenfläche des eingeschobenen Rohrendes eingepreßt als die übrigen Bereiche des Klemmzahns 16. Es wird somit eine örtliche Erhöhung der Flächenpressung zwischen dem Klemmzahnteil 110 und dem Rohr erreicht und damit eine nicht unwesentliche Erhöhung der Haltekraft gewährleistet. Die derart ausgebildete Einsteckkupplung gewährleistet auch bei sehr hohen Innendrücken eines Rohrleitungssystems eine dauerhafte, funktionssichere und formschlüssige Verbindung. Die Nase 108 steht über die konische Außenfläche 10 des Klemmrings 6 in einer vorgegebenen Höhe 112 vor. Die Höhe der Nase 112 und die Größe des Klemmzahns 106 sind derart aufeinander abgestimmt, daß ein sicherer Formschluß zwischen dem Klemmring 6 und dem eingeschobenen Rohrende gewährleistet ist. Wie aus Fig. 10 ersichtlich, sind in zweckmäßiger Weise drei radial nachgiebige Zungen 106 vorgesehen, welche sich vorzugsweise über einen Winkelbereich von 20° bis 40°, insbesondere in der Größenordnung von 30°, bezogen auf die Längsachse 20 erstrecken.

Fig. 11 zeigt in einem axialen Schnitt den Muffenkörper 2 der besonderen Ausführungsform gemäß Fig. 6, und Fig. 12 zeigt eine axiale Ansicht in Blickrichtung XII gemäß Fig. 11. In Fig. 12 sind die drei Gewindesegmente 114 des Außengewindes und die Zwischenräume 116 gut zu erkennen. In Fig. 11 sind die unteren Gewindesegmente 114 um 60° bezogen auf die Längsachse 20 verdreht dargestellt. Die Gewindesegmente 114 und die Zwischenräume 116 erstrecken sich jeweils über einen Winkelbereich von näherungsweise 60°. Auch das zugeordnete Innengewinde der Haube ist entsprechend in Gewindesegmente und Zwischenräume unterteilt. Zur Herstellung der Verbindung wird die Haube zunächst derart auf den Muffenkörper 2 axial aufgeschoben, daß die Gewindesegmente der Haube in die Zwischenräume des Muffenkörpers 2 eingreifen und umgekehrt. Anschließend ist die Haube lediglich noch um einen vorgegebenen Winkel, insbesondere nur noch um 60°, derart zu drehen, daß die Gewindesegmente der Haube mit den Gewindesegmenten 114 des Muffenkörpers 2 so in Eingriff gebracht sind. Mittels der oben erläuterten Rastnase, welche in die Rastnut des Muffenkörpers eingreift, ist die definierte Drehwinkelposition der Haube für eine dauerhafte und funktionssichere Arretierung auf dem Muffenkörper 2 sichergestellt.

### Bezugszeichen

- 2: Muffenkörper
- 3,4: Rohrende
- 5: Mittelebene
- 6: Klemmring
- 8: Befestigungskörper / Haube
- 10: konische Außenfläche von 6
- 12: konische Innenfläche von 8
- 14: Schlitz in 6
- 16: Klemmzahn von 6
- 18: Rastelement
- 20: Längsachse
- 22: Umfangsnut in 22
- 24: Längsnut in 8
- 26: konische Außenfläche
- 28: Pfeil
- 30: Seitenwand
- 32: Radius
- 34: freies Ende von 2
- 36: Muffengrund
- 38: Dichtring
- 40: Stützring
- 42: Hülse
- 44: Ring
- 46: axiale Stirnfläche
- 50: Mitnahmekörper
- 52: Anschlagelement / Zunge
- 54: Nut in 42
- 56: Außenfläche von 52
- 58: Endfläche von 54
- 60: Kante
- 62: Gegenfläche
- 64: strichpunktierte Linie
- 66: Steg
- 68: Länge von 42
- 70: Winkel
- 72: Arm für 18
- 74: Anlagefläche
- 76: Winkel
- 80: Innengewinde von 8
- 82: Außengewinde von 2
- 84: Anschlag
- 86: axiale Stirnfläche von 8
- 88: Rastnut
- 90: Rastnase
- 92: Ausnehmung
- 94: Boden
- 96: Anschlag von 6
- 98: Freiraum
- 100: axiale Endfläche von 2
- 102: Bund / Stufe von 8
- 104: Schlitz
- 106: Zunge
- 108: Nase
- 110: Klemmzahn
- 112: Höhe von 108
- 114: Gewindesegment
- 116: Zwischenraum

## Patentansprüche

1. Einsteckkupplung für Rohre, enthaltend einen Muffenkörper (2) und eine Halteeinrichtung, welche insbesondere einen Klemmring (6) enthält, zur Verbindung eines Rohrendes mit dem Muffenkörper,
dadurch gekennzeichnet, daß im Muffenkörper (2) ein mittels des Rohrendes (3, 4) axial verschiebbarer Mitnahmekörper (50) angeordnet ist, welcher unabhängig von der Halteeinrichtung ausgebildet ist, daß der Mitnahmekörper (50) ein Anschlagelement (52) aufweist, welches beim Einschieben des Rohrendes (3, 4) über eine Kante (60) geschoben wird und beim Erreichen einer vorgegebenen Einschubtiefe des Rohrendes (3, 4) an einer Gegenfläche (62) unter Erzeugung eines akustischen Signals und / oder eines Schwingungssignals anschlägt.

2. Einsteckkupplung nach Anspruch 1, dadurch gekennzeichnet, daß der Mitnahmekörper (50) ringförmig ausgebildet ist und wenigstens ein, vorzugsweise drei, radial nach außen vorstehende Anschlagelemente (52) aufweist, insbesondere in Form von Zungen, und / oder daß der Mitnahmekörper (50) zur Halteeinrichtung, insbesondere deren Klemmring (6), axial beabstandet ist.

3. Einsteckkupplung nach Anspruch 1 oder 2, dadurch gekennzeichnet, daß das Anschlagelement (52) einer Nut (54) zugeordnet ist und beim Verschieben mittels des Rohrendes (3, 4) über eine vorzugsweise geneigt angeordnete Endfläche (58) der Nut (54) bewegbar ist und / oder daß die Kante (60) einen kleineren Durchmesser aufweist als die Gegenfläche (62).

4. Einsteckkupplung nach einem der Ansprüche 1 bis 3, dadurch gekennzeichnet, daß der Mitnahmekörper (50) und/oder das Anschlagelement (52) innerhalb einer Hülse (42) angeordnet ist, welche im Muffenkörper (2) fixiert ist.

5. Einsteckkupplung nach einem der Ansprüche 1 bis 4, dadurch gekennzeichnet, daß der Mitnahmekörper (50) zunächst über wenigstens einen Steg (66) innerhalb des Muffenkörpers (2), vorzugsweise in der Hülse (42), festgelegt ist und / oder daß über den Umfang verteilt eine vorgebbare Anzahl derartiger Stege (66) vorhanden ist und / oder daß der Steg (66), der Mitnahmekörper (50) und die Hülse (42) einteilig hergestellt sind.

6. Einsteckkupplung nach einem der Ansprüche 1 bis 5, dadurch gekennzeichnet, daß die Hülse (42) und/oder ein Klemmring (6) für das Rohrende (3, 4) und/ oder ein Dichtring (38) und/oder ein Stützring (40) innerhalb des Muffenkörpers (2) in einer gemeinsamen Ausnehmung desselben angeordnet sind und mittels eines Befestigungskörpers (8) im Muffenkörper (2) festgelegt sind.

7. Einsteckkupplung nach einem der Ansprüche 1 bis 6, dadurch gekennzeichnet, daß der Befestigungskörper (8), welcher vorzugsweise als eine Haube ausgebildet ist, wenigstens ein Rastelement (18) zur Verbindung mit dem Muffenkörper (2) oder ein Innengewinde (80), welches mit einem Außengewinde (82) des Muffenkörpers (2) korrespondiert, einer lösbaren Schraubverbindung aufweist und / oder daß der Befestigungskörper (8) wenigstens eine Rastnase (90) aufweist, welche nach dem Aufschrauben des Befestigungskörpers (8) auf den Muffenkörper (2) in eine zugeordnete Rastnut (88) des Muffenkörpers (2) eingreift.

8. Einsteckkupplung nach Anspruch 7, dadurch gekennzeichnet, daß das Rastelement (18) an einem Arm (72) der Haube (8) angeordnet ist und/oder daß die Haube (8) über den Umfang verteilt eine vorgebbare Anzahl derartiger Arme (72) mit radial nach innen gerichteten und in eine Umfangsnut (22) des Muffenkörpers (2) eingreifenden Rastelemente (18) aufweist.

9. Einsteckkupplung nach Anspruch 7, dadurch gekennzeichnet, daß das Außengewinde (82) des Muffenkörpers in Gewindesegmente (114) mit dazwischenliegenden Zwischenräumen (116) unterteilt ist, daß auch das Innengewinde des Befestigungskörpers (8) entsprechend in Gewindesegmente und Zwischenräume unterteilt ist und daß der Befestigungskörper (8) axial derart auf den Muffenkörper (2) aufschiebbar ist, daß die Gewindesegmente (114) in die Zwischenräume des Befestigungskörpers (8) eingreifen und umgekehrt, wobei nachfolgend durch Drehung des Befestigungskörpers (8) entsprechend der Größe der Gewindesegmente diese miteinander in Eingriff bringbar sind.

10. Einsteckkupplung, insbesondere nach einem der Ansprüche 1 bis 9, dadurch gekennzeichnet, daß ein innerhalb des Befestigungskörpers (8) angeordneter Klemmring (6) wenigstens eine in radialer Richtung bewegbare Zunge (106) aufweist, daß die Zunge (106) an ihrer Außenfläche (10) eine vorstehende Nase (108) aufweist, über welche beim Festlegen des Befestigungskörpers (8) bezüglich des Muffenkörpers (2) eine radiale Bewegung der Zunge (106) derart erfolgt, daß über einen an der Innenseite der Zunge (106) vorgesehenen Klemmzahn (110) eine formschlüssige Verbindung mit dem Rohrende (3, 4) herstellbar ist.

11. Einsteckkupplung nach Anspruch 10, dadurch gekennzeichnet, daß der einen Schlitz (14) enthaltende Klemmring (6) eine Anzahl, vorzugsweise drei, über den Umfang verteilt angeordnete Zungen (106) mit radial vorstehenden Nasen (108) aufweist und / oder daß die Höhe (112) der Nase (108) derart auf einen innenliegenden Klemmzahn (110) abgestimmt ist, daß eine formschlüssige Verbindung zwischen Klemmring (6) und dem eingeschobenen Rohrende (3, 4) herstellbar ist.

12. Einsteckkupplung, insbesondere nach einem der Ansprüche 1 bis 11, dadurch gekennzeichnet, daß der Klemmring (6) einen Anschlag (96) zur Begrenzung der radialen Bewegung des Klemmrings (6) beim Einschieben eines Rohrendes (3, 4) aufweist und / oder daß durch Begrenzung der axialen Bewegung des Klemmrings (6) beim Einschieben des Rohrendes (3, 4) eine Erhöhung der Anpresskraft eines Dichtringes (38) und / oder eine Erhöhung des Einschubwiderstandes zumindest näherungsweise vermieden wird.
